# EUROPEAN PATENT APPLICATION

(11) **EP 4 068 435 A1**
(43) Date of publication of application: **05.10.2022**
(21) Application number: 19954609.4
(22) Date of filing: 27.11.2019
(51) Int. Cl.: H01M 4/88, H01M 4/90

(54) **MEMBRANE ELECTRODE AND MANUFACTURING METHOD THEREOF, AND FUEL CELL**

(71) Applicant: Suzhou Hydrogine Power Technology Co., Ltd., Suzhou, Jiangsu 215100 (CN)
(72) Inventor: ZHANG, Xiaohua, Suzhou, Jiangsu 215100 (CN); WU, Dan, Suzhou, Jiangsu 215100 (CN); FAN, Shuqiong, Suzhou, Jiangsu 215100 (CN); MI, Shiyang, Suzhou, Jiangsu 215100 (CN); ZHU, Wei, Suzhou, Jiangsu 215100 (CN)
(74) Representative: Ripamonti, Enrico
(86) International application number: PCT/CN2019/121277
(87) International publication number: WO 2021/102739

(57) **Abstract**

The present invention relates to the technical field of fuel cells. Provided are a membrane electrode and a manufacturing method thereof, and a fuel cell. The membrane electrode comprises a proton exchange membrane, an anode catalyst and an anode diffusion layer. The anode catalyst comprises a first catalyst layer and a second catalyst layer. The proton exchange membrane, the first catalyst layer, the second catalyst layer and the anode diffusion layer are sequentially arranged. The first catalyst layer comprises a hydrogen oxidation catalyst. The second catalyst layer comprises a mixture of a hydrogen oxidation catalyst and a water electrolysis catalyst. Distribution of the hydrogen oxidation catalyst in layers in the anode catalyst extends a duration in which the membrane electrode can tolerate cell reversal and reduces performance loss caused by cell reversal.

## Description

### Technical Field

The present disclosure relates to the technical field of full cell, in particular to a membrane electrode (membrane electrode assembly) and manufacturing method thereof, and a fuel cell.

### Background Art

Proton exchange membrane fuel cell (PEMFC) is a device that converts hydrogen energy into electric energy, and final emission thereof is only water, and the PEMFC is a clean, green and pollution-free power generation device, which has broad application prospects in the fields of automobile, ship, rail transit, fixed base station, and unmanned aerial vehicle and the like. The core components inside the proton exchange membrane fuel cell are called membrane electrode assemblies (MEA), which are the smallest primary unit for power generation. However, under some severe working conditions, the membrane electrode assembly may be damaged, which eventually lead to the failure of the fuel cell. When the fuel cell enters into commercialization, lifespan thereof should be guaranteed, and the performance loss of the membrane electrode assembly under severe working conditions should be reduced and avoided.

Cell reversal is one of the severe working conditions encountered during the operation of membrane electrode assemblies. Specifically, during the operation of the cell stack, when the anode of a single or multiple membrane electrode assemblies occurs water plugging or has ice condensed, the hydrogen transmission of the anode is hindered and the hydrogen cannot reach the surface of catalyst Pt to generate protons. In order to maintain the current (proton flow) before cell reversal, the potential of the anode rises from 0V before cell reversal (relative to the standard hydrogen electrode, SHE) to higher than 1.5V in a short time, and at this time, the voltage of the membrane electrode assembly is usually lower than -1V; under the high potential of the anode, the carbon component reacts with water, and the carbon is corroded to generate a proton to sustain the current. The carbon continues to be corroded, eventually leading to the failure of the membrane electrode assembly.

At the system level, the prevention of the cell reversal of the fuel cell is mainly implemented through the voltage monitoring sensor. However, this does not substantially reduce the performance loss caused by the cell reversal. The principle of voltage monitoring is to detect the potential of the membrane electrode assembly, if the voltage of membrane electrode assembly changes from positive to negative, it means that the cell reversal occurs, and the circuit needs to be cut off in time. But when a situation that the voltage is changed to be negative is detected, the cell reversal has already occurred for a period of time, and the performance loss is still unavoidable.

When in cell reversal, carbon is corroded to maintain proton flow (C+2H₂O=4H⁺+CO₂+4e⁻), carbon corrosion can be inhibited as long as there are other ways to maintain proton flow alternatively. Water electrolysis (OER, 2H₂O=4H⁺+O₂+4e⁻) can provide proton flow, but water electrolysis usually requires a voltage higher than 2V, which is higher than the potential of carbon corrosion; in order to reduce the potential of water electrolysis, it is necessary to introduce a water electrolysis catalyst to maintain the proton flow via the water electrolysis path at a relatively low potential, thereby reducing or even avoiding carbon corrosion, which is the principle of resisting cell reversal.

The existing membrane electrode assembly cannot well reduce the performance loss after cell reversal is occurred, and the membrane electrode assembly has a weak capability of resisting cell reversal.

### Summary

The purpose of the present disclosure is to provide a membrane electrode assembly, and manufacturing method thereof, and a fuel cell, which can effectively reduce the performance loss after cell reversal is occurred, extend the cell reversal tolerance time, and enhance the capability of resisting cell reversal for the membrane electrode assembly.

The embodiments of the present disclosure provide a membrane electrode assembly, which comprises a proton exchange membrane, an anode catalyst, and an anode diffusion layer. The anode catalyst comprises a first catalyst layer and a second catalyst layer. The proton exchange membrane, the first catalyst layer, the second catalyst layer and the anode diffusion layer are arranged in sequence. In the above, the first catalyst layer includes a hydrogen oxidation catalyst, and the second catalyst layer includes a mixture of the hydrogen oxidation catalyst and a water electrolysis catalyst.

The water electrolysis catalyst is provided on one side of the anode catalyst layer close to the anode diffusion layer, when the cell reversal occurs, carbon corrosion occurred at the water electrolysis catalyst can be reduced, and the water electrolysis catalyst can electrolyze the water on one side close to the anode diffusion layer, which can provide proton flow for the proton exchange membrane, reduce the carbon corrosion at the hydrogen oxidation catalyst, and extend the cell reversal tolerance time. Both the side close to the proton exchange membrane and the side close to the anode diffusion layer of the anode catalyst layer have the hydrogen oxidation catalyst, under the condition that there is enough hydrogen oxidation catalyst to provide the proton flow, since part of the hydrogen oxidation catalyst is formed on the side of the anode catalyst layer close to the anode diffusion layer, the carbon corrosion of the hydrogen oxidation catalyst can be further reduced, the performance loss after cell reversal occurs can be reduced, and the cell reversal tolerance time can be extended.

### Brief Description of Drawings

In order to illustrate the technical solutions in the embodiments of the present disclosure more clearly, the drawings that need to be used in the embodiments will be briefly introduced below, it should be understood that the following drawings only show some embodiments of the present disclosure, and therefore should not be regarded as a limitation of the scope, and for those ordinary skilled in the art, other relevant drawings can also be obtained in light of these drawings, without using any inventive efforts.
FIG. 1 is a sectional view of a membrane electrode assembly provided by an embodiment of the present disclosure;
FIG. 2 shows the effect of Pt (Ir) mass fraction on the performance loss after cell reversal;
FIG. 3 shows the effect of the overnight recovery of the membrane electrode assembly on the performance loss after cell reversal;
FIG. 4 shows the effect of graphitization for carbon carrier on the cell reversal tolerance time;
FIG. 5 shows the effect of the distribution of HOR catalysts on the performance loss caused by simulated cell reversal;
FIG. 6 shows the effect of the distribution of HOR catalysts on the performance loss after cell reversal (Example 1 and Comparative Example 5); and
FIG. 7 shows the effect of the distribution of HOR catalysts on the performance loss after cell reversal (Example 2 and Comparative Example 10).

Reference signs: 30-membrane electrode assembly; 310-cathode diffusion layer; 320-cathode catalyst layer; 330-proton exchange membrane; 340-anode catalyst layer; 350-anode diffusion layer; 341-first catalyst layer; 342-second catalyst layer.

### Detailed Description of Embodiments

To make the objectives, technical solutions and advantages of the embodiments of the present disclosure clearer, the technical solutions in the embodiments of the present disclosure will be described clearly and completely below. If the specific conditions are not indicated in the embodiments, it is carried out according to the conventional conditions or the conditions suggested by the manufacturer. The reagents or instruments used without indicating the manufacturer are all conventional products that can be purchased and obtained from the market.

There are two main parameters to measure the capability of resisting cell reversal for the membrane electrode assembly, one is the general cell reversal tolerance time, and the other is the performance loss during cell reversal.

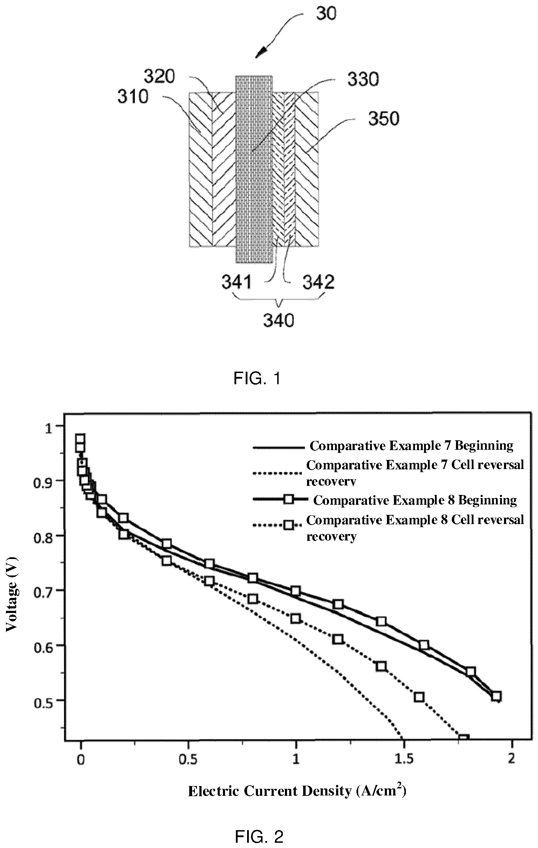

In order to extend the cell reversal tolerance time of the membrane electrode assembly, and reduce the performance loss during cell reversal of the membrane electrode assembly. In the present disclosure, the hydrogen oxidation catalyst may be distributed in different sides. FIG. 1 is a sectional view of a membrane electrode assembly 30 provided by an embodiment of the present disclosure. Referring to FIG. 1, the membrane electrode assembly 30 includes a cathode diffusion layer 310, a cathode catalyst layer 320, a proton exchange membrane 330, an anode catalyst layer 340 and an anode diffusion layer 350 arranged in sequence. The anode catalyst layer 340 includes a first catalyst layer 341 and a second catalyst layer 342, the cathode diffusion layer 310, the cathode catalyst layer 320, the proton exchange membrane 330, the first catalyst layer 341, the second catalyst layer 342 and the anode diffusion layer 350 are arranged in sequence. In the above, the first catalyst layer 341 includes a hydrogen oxidation catalyst, and the second catalyst layer 342 includes a mixture of the hydrogen oxidation catalyst and a water electrolysis catalyst.

If both the side close to the proton exchange membrane 330 and the side close to the anode diffusion layer 350 of the anode catalyst layer 340 have the hydrogen oxidation catalyst, under the condition that there is enough hydrogen oxidation catalyst to provide the proton flow, since part of the hydrogen oxidation catalyst is formed on the side of the anode catalyst layer 340 close to the anode diffusion layer 350, the water content near the part of the hydrogen oxidation catalyst can be reduced, the carbon corrosion of the hydrogen oxidation catalyst can be reduced, the performance loss during cell reversal can be reduced. The water electrolysis catalyst is provided on one side of the anode catalyst layer 340 close to the anode diffusion layer 350, when the cell reversal occurs, carbon corrosion occurred at the water electrolysis catalyst can be reduced, and the water electrolysis catalyst can electrolyze the water on one side close to the anode diffusion layer 350, which can provide proton flow for the proton exchange membrane, reduce the carbon corrosion at the hydrogen oxidation catalyst, and extend the cell reversal tolerance time.

In the above, the water electrolysis catalyst comprises a first carrier and an active component of the water electrolysis catalyst loaded on the first carrier. The hydrogen oxidation catalyst comprises a second carrier and an active component of the hydrogen oxidation catalyst loaded on the second carrier.

In order to increase the corrosion resistance of the anode carrier, and ensure that the active components of the water electrolysis catalyst and the active components of the hydrogen oxidation catalyst do not fall off, such that the functions of the water electrolysis catalyst and the hydrogen oxidation catalyst are always played, the active components can be loaded on the corrosion-resistant carrier, the stronger the corrosion resistance of the anode carrier is, the slower the carbon corrosion is; and the less the carbon carrier is, the lower the performance loss during cell reversal is.

In order to increase the corrosion resistance of the anode carrier of the anode catalyst, the anode carrier (that is the first carrier and the second carrier) may be a conductive metal oxide or graphitic carbon. Both the graphitic carbon and the conductive metal oxide are the carrier resisting high potential (above 1.5V) corrosion, using the conductive metal oxide or the graphitic carbon as the anode carrier of active material can extend the cell reversal tolerance time.

In the above, the conductive metal oxide does not contain carbon, which can avoid carbon corrosion. Optionally, the conductive metal oxide is one selected from Ti₄O₇, Nb-TiO₂ and ITO. The graphitic carbon can be a graphitized carbon material, and after the carbon is graphitized, carbon corrosion can be reduced.

Further, the active component of the water electrolysis catalyst may be one or more of RuO₂, IrO₂, and RuxIr₁₋ₓO₂. For example, the active component of the water electrolysis catalyst may be RuO₂; the active component of the water electrolysis catalyst may be IrO₂; the active component of the water electrolysis catalyst may be RuₓIr₁₋ₓO₂; the active component of the water electrolysis catalyst may be a mixture of RuO₂ and IrO₂; the active component of the water electrolysis catalyst may be a mixture of RuO₂ and RuₓIr₁₋ₓO₂; the active component of the water electrolysis catalyst may be a mixture of IrO₂ and RuₓIr₁₋ₓO₂; and the active component of the water electrolysis catalyst may be a mixture of RuO₂, IrO₂ and RuₓIr₁₋ₓO₂. Of course, in the present disclosure, the active components of the water electrolysis catalyst are not limited, as long as they can be used as the active components of the water electrolysis catalyst, they are all within the protection scope of the present disclosure.

The water electrolysis catalyst may provide proton flow through water electrolysis, and can reduce the potential of water electrolysis, which makes the anode potential relatively low, reduces carbon corrosion, and reduces the performance loss after cell reversal while ensuring the cell reversal tolerance time.

The mass percentage of the active component of the water electrolysis catalyst in the water electrolysis catalyst is 10%-80%. Optionally, the mass percentage of active component in the water electrolysis catalyst is 40%-80%.

In the above, the active component of the hydrogen oxidation catalyst is a metal catalyst, which comprises one or more of Pt, Ir, Ptlr alloy and Pd. For example, the active component of the hydrogen oxidation catalyst may be Pt; the active component of the hydrogen oxidation catalyst may be Ir; the active component of the hydrogen oxidation catalyst may be Ptlr alloy; and the active component of the hydrogen oxidation catalyst may be Pd. Of course, in the present disclosure, the active components of the hydrogen oxidation catalyst are not limited, as long as they can be used as the active components of the hydrogen oxidation catalyst, they are all within the protection scope of the present disclosure.

The mass percentage of the active component of the hydrogen oxidation catalyst in the hydrogen oxidation catalyst is 10%-80%. Optionally, the mass percentage of Pt in the hydrogen oxidation catalyst is 40%-80%.

Optionally, the hydrogen oxidation catalyst in the first catalyst layer 341 and the hydrogen oxidation catalyst in the second catalyst layer 342 may be of the same type or different. For example, the active component of the hydrogen oxidation catalyst in the first catalyst layer 341 is Pt, and the active component of the hydrogen oxidation catalyst in the second catalyst layer 342 is also Pt; or the active component of the hydrogen oxidation catalyst in the first catalyst layer 341 is Pt , the active component of the hydrogen oxidation catalyst in the second catalyst layer 342 is Ir; or the active component of the hydrogen oxidation catalyst in the first catalyst layer 341 is Ir, and the active component of the hydrogen oxidation catalyst in the second catalyst layer 342 is Pt.

Optionally, the mass ratio of the hydrogen oxidation catalyst in the first catalyst layer 341 and the hydrogen oxidation catalyst in the second catalyst layer 342 may be 1:10-1:0.1. Further, the mass ratio of the hydrogen oxidation catalyst in the first catalyst layer 341 and the hydrogen oxidation catalyst in the second catalyst layer 342 may be 1:5-1:0.5. Further, the mass ratio of the hydrogen oxidation catalyst in the first catalyst layer 341 and the hydrogen oxidation catalyst in the second catalyst layer 342 may be 1:2-1:0.8. Further, the mass ratio of the hydrogen oxidation catalyst in the first catalyst layer 341 and the hydrogen oxidation catalyst in the second catalyst layer 342 may be 1:1.

When the hydrogen oxidation catalyst is distributed in different sides, the preparation method of the obtained membrane electrode assembly 30 may be as follows: forming the hydrogen oxidation catalyst on the anode side of the proton exchange membrane 330 to obtain the first catalyst layer 341, forming a mixture of hydrogen oxidation catalyst and the water electrolysis catalyst on the anode diffusion layer 350 to obtain the second catalyst layer 342, and attaching the first catalyst layer 341 and the second catalyst layer 342, or forming the hydrogen oxidation catalyst on the anode side of the proton exchange membrane 330 to obtain the first catalyst layer 341, and forming a mixture of the hydrogen oxidation catalyst and the water electrolysis catalyst on one side of the first catalyst layer 341 facing away from the proton exchange membrane 330 to obtain the second catalyst layer 342, and forming the anode diffusion layer 350 on one side of the second catalyst layer 342 facing away from the first catalyst layer 341. The above-mentioned membrane electrode assembly 30 may be obtained.

For example, the slurry of hydrogen oxidation catalyst is sprayed on the anode side of the proton exchange membrane 330 to obtain the first catalyst layer 341, a mixed slurry of the water electrolysis catalyst and the hydrogen oxidation catalyst is sprayed on the anode diffusion layer 350 to obtain the second catalyst layer 342, and the first catalyst layer 341 and the second catalyst layer 342 are attached to each other.

The membrane electrode assembly 30 obtained by the above-mentioned method can not only extend the cell reversal tolerance time of the membrane electrode assembly, but also reduce the performance loss during cell reversal of the membrane electrode assembly. The above-mentioned membrane electrode assembly is used to prepare a fuel cell, and thus the performance of the fuel cell is better.

### Example 1

Preparation of membrane electrode assembly: the cathode catalyst was 60% Pt/C (Ketjen Black), the anode HOR catalyst (hydrogen oxidation catalyst) was 40% Pt/GrC (graphitized Ketjen Black), and the anode OER catalyst (water electrolysis catalyst) was 40% IrO₂/GrC (graphitized Ketjen Black, the same as above, which will not be repeated hereafter).

The cathode catalyst was 60% Pt/C, the anode HOR catalyst was 40% Pt/GrC, which had the layered structure design, and the anode OER catalyst was 40% IrO₂/GrC. The loading amount of Pt in the cathode catalyst was 0.4 mg_{Pt}/cm², which was sprayed on the cathode side of CCM (proton exchange membrane). The total loading amount of Pt in the anode HOR catalyst was 0.1 mg_{Pt}/cm², and the loading amount of IrO₂ in the OER catalyst was 0.05 mg_{Ir}/cm². In the above, half of the anode HOR catalyst (0.05mg_{Pt}/cm²) was sprayed on the anode side of the CCM, and the other half (0.05mg_{Pt}/cm²) of the anode HOR catalyst was mixed with the anode OER catalyst (0.05mg_{Ir}/cm²) and then sprayed on the anode GDL.

The cell reversal resistance test is the same as that of Comparative Example 1. After the cell reversal finished, the membrane electrode assembly was placed for 10 h to perform overnight recovery, and the V-I curve after cell reversal was tested to compare the performance loss.

### Example 2

Preparation of membrane electrode assembly: the cathode catalyst was 60% Pt/C, the anode HOR catalyst was 70% Pt/GrC, and the anode OER catalyst was 70% IrO₂/GrC.

The cathode catalyst was 60%Pt/C, the anode HOR catalyst was 70% Pt/GrC, which had the layered structure design, and the anode OER catalyst was 70% IrO₂/GrC. The loading amount of Pt in the cathode catalyst was 0.4 mg_{Pt}/cm², which was sprayed on the cathode side of the CCM. The total loading amount of Pt in the anode HOR catalyst was 0.1 mg_{Pt}/cm², and the loading amount of IrO₂ in the OER catalyst was 0.05 mg_{Ir}/cm². In the above, half of the anode HOR catalyst (0.05mg_{Pt}/cm²) was sprayed on the anode side of the CCM, and the other half (0.05mg_{Pt}/cm²) of the anode HOR catalyst was mixed with the anode OER catalyst (0.05mg_{Ir}/cm²) and then sprayed on the anode GDL.

The cell reversal resistance test is the same as that of Comparative Example 1, after the cell reversal finished, the membrane electrode assembly was placed for 10 h to perform overnight recovery, and the V-I curve after cell reversal was tested to compare the performance loss.

### Comparative Example 1

The preparation of membrane electrode assembly: the cathode catalyst was 60% Pt/C, the anode HOR catalyst was 40% Pt/GrC, and the anode OER catalyst was 40% IrO₂/GrC.

The cathode catalyst was 60% Pt/C, the anode HOR catalyst was 40% Pt/GrC, and the anode OER catalyst was 40% IrO₂/GrC. The loading amount of Pt in the cathode catalyst was 0.4 mg_{Pt}/cm², which was sprayed on the cathode side of the CCM. The loading amount of Pt in the anode HOR catalyst was 0.1 mg_{Pt}/cm², which was sprayed on the anode side of the CCM, and the loading amount of IrO₂ in the OER catalyst was 0.1 mg_{Ir}/cm², which was sprayed on the anode diffusion layer (GDL).

The condition for the cell reversal resistance test was:
anode flow rate: 1slpm, cathode flow rate: 1slpm, test temperature: 75°C, relative humidity: anode 100%RH, cathode 100%RH, and test pressure: normal pressure.

After the V-I curve test was finished, a constant current source with a current density of 0.2A/cm² or 1A/cm² was connected outside to keep the H₂/Air state until the voltage was stable. Then, the anode H₂ was switched to N₂, and the working condition that the anode H₂ was insufficient to cause the cell reversal was simulated. Since it took some time for N₂ to purge the H₂ in the pipeline, the actual start time of cell reversal was calculated from the moment of the voltage dip. Simultaneously, -1.5V was set as the protection voltage, when the battery voltage was lower than -1.5V, the constant current source stopped working, and this moment can be considered as the theoretical ending time of the cell reversal (automatic stop); if the cell reversal tolerance time was longer, the constant current source can also be manually stopped at a certain set time, which was manual stop. Regardless of whether it was automatically or manually stopped, the time from the start of the cell reversal to the end of the cell reversal was the cell reversal tolerance time, during this time, the N₂/Air state with insufficient H₂ was simulated. V-I curve after cell reversal was tested to compare performance loss.

### Comparative Example 2

The cathode catalyst was 60% Pt/C, the anode HOR catalyst was 70% Pt/GrC, and the anode OER catalyst was 70% IrO₂/GrC.

The preparation of membrane electrode assembly: the cathode catalyst was 60% Pt/C, the anode HOR catalyst was 70% Pt/GrC, and the anode OER catalyst was 70% IrO₂/GrC. The loading amount of Pt in the cathode catalyst was 0.4 mg_{Pt}/cm², which was sprayed on the cathode side of the CCM. The total loading amount of Pt in the anode HOR catalyst was 0.1 mg_{Pt}/cm², which was sprayed on the anode side of the CCM, and the loading amount of IrO₂ in the OER catalyst was 0.1 mg_{Ir}/cm², which was sprayed on the anode GDL.

The cell reversal resistance test is the same as that of Comparative Example 1, after the cell reversal finished, and the V-I curve after cell reversal was tested to compare the performance loss.

### Comparative Example 3

The preparation of membrane electrode assembly: the cathode catalyst was 60% Pt/C, the anode HOR catalyst was 70% Pt/GrC.

The cathode catalyst was 60% Pt/C, the anode HOR catalyst was 70% Pt/GrC, which had a layered structure design. The loading amount of Pt in the cathode catalyst was 0.4 mg_{Pt}/cm², which was sprayed on the cathode side of the CCM. The total loading amount of Pt in the anode HOR catalyst was 0.1 mg_{Pt}/cm², wherein 0.05 mg_{Pt}/cm² was sprayed on the anode side of the CCM, and 0.05 mg_{Pt}/cm² was sprayed on the anode GDL.

The procedure of the simulated cell reversal test (anode aging) was as follows:
simulated cell reversal test: anode flow rate: 0.5slpm, cathode flow rate: 0.5slpm, test temperature: 80°C, relative humidity: anode 45%RH, cathode 45%RH, and test pressure: 0.5 bar, 0.5 bar.

After the V-I curve test was finished, H₂/N₂ atmosphere was switched to N₂/H₂, Arbin was connected outside, voltage was set to 1.6V, and time was set to 2 hours. The working condition of cell reversal for the anode was simulated. After the simulated cell reversal finished, the membrane electrode assembly was placed for 10 h to perform overnight recovery, and the V-I curve after simulated cell reversal was tested to compare the performance loss.

### Comparative Example 4

The preparation of HOR catalyst is the same as that of Comparative Example 3.

The preparation of membrane electrode assembly: cathode catalyst was 60% Pt/C, anode HOR catalyst was 70% Pt/GrC. The loading amount of Pt in the cathode catalyst was 0.4 mg_{Pt}/cm², which was sprayed on the cathode side of the CCM, and the total loading amount of Pt in the anode HOR catalyst was 0.1 mg_{Pt}/cm², which was sprayed on the anode side of the CCM.

The simulated cell reversal test is the same as that of Comparative Example 3, after the simulated cell reversal finished, the membrane electrode assembly was placed for 10h to perform overnight recovery, the V-I curve after the simulated cell reversal was tested to compare the performance loss.

### Comparative Example 5

The preparation of HOR catalyst, OER catalyst and membrane electrode assembly is the same as that of Comparative Example 1, and the cell reversal resistance test is also the same as that of Comparative Example 1, after the cell reversal test, membrane electrode assembly was placed for 10h to perform overnight recovery, and then performance loss before and after cell reversal was compared.

### Comparative Example 6

The preparation of HOR catalyst, OER catalyst and membrane electrode assembly is the same as that of Comparative Example 2, and the cell reversal resistance test is also the same as that of Comparative Example 1, after the cell reversal test, membrane electrode assembly was placed for 10h to perform overnight recovery, and then performance loss before and after cell reversal was compared.

### Comparative Example 7

The preparation of HOR catalyst, OER catalyst and membrane electrode assembly is the same as that of Comparative Example 1, and the cell reversal resistance test is also the same as that of Comparative Example 1, but the cell reversal tolerance time was 60 min. After the cell reversal test, membrane electrode assembly was placed for 10h to perform overnight recovery, and then performance loss before and after cell reversal was compared.

### Comparative Example 8

The preparation of HOR catalyst, OER catalyst and membrane electrode assembly is the same as that of Comparative Example 2, and the cell reversal resistance test is also the same as that of Comparative Example 2, but the cell reversal tolerance time was 60 min. After the cell reversal test, membrane electrode assembly was placed for 10h to perform overnight recovery, and then performance loss before and after cell reversal was compared.

### Comparative Example 9

The preparation of membrane electrode assembly: cathode catalyst was 60% Pt/C, anode HOR catalyst was 60% Pt/C, and anode OER catalyst was 40% IrO₂/C. The loading amount of Pt in the cathode catalyst was 0.4 mg_{Pt}/cm², which was sprayed on the cathode side of the CCM, and the loading amount of Pt in the anode HOR catalyst was 0.1 mg_{Pt}/cm², which was sprayed on the anode side of the CCM, and the loading amount of IrO₂ in the anode OER catalyst was 0.1 mg_{Ir}/cm², which was sprayed on the anode GDL.

The cell reversal resistance test is the same as Comparative Example 1. After the cell reversal finished, the V-I curve after cell reversal was tested to compare the performance loss.

### Comparative Example 10

The preparation of HOR and OER catalysts is the same as that of Comparative Example 2.

The preparation of membrane electrode assembly: cathode catalyst was 60% Pt/C, anode HOR catalyst was 70% Pt/GrC, and anode OER catalyst was 70% IrO₂/GrC. The loading amount of Pt in the cathode catalyst was 0.4 mg_{Pt}/cm², which was sprayed on the cathode side of the CCM. The loading amount of Pt in the anode HOR catalyst was 0.1 mg_{Pt}/cm², which was sprayed on the anode side of the CCM. The loading amount of IrO₂ in the anode OER catalyst was 0.05 mg_{Ir}/cm², which was sprayed on the anode GDL.

The cell reversal test is the same as that of Comparative Example 1, after the cell reversal finished, membrane electrode assembly was placed for 10h to perform overnight recovery, and the V-I curve after cell reversal was tested to compare the performance loss.

### Experimental Example 1

For the performance loss before and after cell reversal, the voltage loss of the small current region (LCD, 0.2A/cm²) and the voltage loss of the high current region (HCD, 1A/cm²) were herein selected to comprehensively reflect the performance loss before and after cell reversal, wherein the membrane electrode assembly components and test conditions of Example 1-Example 2 and Comparative Example 1-Comparative Example 10 are as shown in Table 1:

**Table 1. Different membrane electrode assembly components and test conditions**

| | CCM anode side | | | | Anode GDL | | | | Anode test (time) | | overnight |
|---|---|---|---|---|---|---|---|---|---|---|---|
| | Pt/mg_{Pt}/ cm² | Pt/ % | Ir/mg_{Pt}/ cm² | Ir/ % | Pt/mg _{Pt}/cm² | Pt/ % | Ir/mg_{Pt}/ cm² | Ir/ % | scheme | time | |
| Example 1 | 0.05 | 40 | - | - | 0.05 | 40 | 0.05 | 40 | cell reversal | 40min | yes |
| Example 2 | 0.05 | 70 | - | - | 0.05 | 70 | 0.05 | 70 | cell reversal | 90min | yes |
| Comparative Example 1 | 0.1 | 40 | - | - | - | - | 0.1 | 40 | cell reversal | 40min | no |
| Comparative Example 2 | 0.1 | 70 | - | - | - | - | 0.1 | 70 | cell reversal | 40min | no |
| Comparative Example 3 | 0.05 | 70 | - | - | 0.05 | 70 | - | - | simulation | 1.6V, 2h | yes |
| Comparative Example 4 | 0.1 | 70 | - | - | - | - | - | - | simulation | 1.6V, 2h | yes |
| Comparative Example 5 | 0.1 | 40 | - | - | - | - | 0.1 | 40 | cell reversal | 40min | yes |
| Comparative Example 6 | 0.1 | 70 | - | - | - | - | 0.1 | 70 | cell reversal | 40min | yes |
| Comparative Example 7 | 0.1 | 40 | - | - | - | - | 0.1 | 40 | cell reversal | 60min | yes |
| Comparative Example 8 | 0.1 | 70 | - | - | - | - | 0.1 | 70 | cell reversal | 60min | yes |
| Comparative Example 9 | 0.1 | 40 | - | - | - | - | 0.1 | 40 | cell reversal | 26min | no |
| Comparative Example 10 | 0.1 | 70 | - | - | - | - | 0.05 | 70 | cell reversal | 90min | yes |

The membrane electrode assemblies and test conditions thereof described in Table 1 are used to compare the initial performance of the membrane electrode assemblies with the performance after cell reversal for obtaining Table 2.

**Table 2. Initial performance and performance loss after cell reversal for different membrane electrode assemblies**

| | 0.2 (before) | 0.2 (after) | ΔV₁ | 1 (before) | 1 (after) | ΔV₂ | Cell reversal tolerance time |
|---|---|---|---|---|---|---|---|
| Example 1 | 0.844V | 0.839V | 0.005V | 0.691V | 0.678V | 0.013V | 40 min |
| Example 2 | 0.823V | 0.803V | 0.020V | 0.692V | 0.667V | 0.025V | 90 min |
| Comparative Example 1 | 0.804V | 0.784V | 0.02V | 0.688V | 0.570V | 0.118V | 40 min |
| Comparative Example 2 | 0.827V | 0.811V | 0.016V | 0.692V | 0.666V | 0.026V | 40 min |
| Comparative Example 3 | 0.820V | 0.828V | -0.008V | 0.696V | 0.697V | -0.001V | 1.6V, 2h |
| Comparative Example 4 | 0.821V | 0.815V | 0.006V | 0.704V | 0.662V | 0.042V | 1.6V, 2h |
| Comparative Example 5 | 0.804V | 0.800V | 0.004V | 0.688V | 0.670V | 0.018V | 40 min |
| Comparative Example 6 | 0.825V | 0.826V | -0.001V | 0.695V | 0.670V | 0.025V | 40 min |
| Comparative Example 7 | 0.807V | 0.807V | 0V | 0.686V | 0.609V | 0.077V | 60 min |
| Comparative Example 8 | 0.829V | 0.800V | 0.029V | 0.696V | 0.647V | 0.049V | 60 min |
| Comparative Example 9 | 0.766V | 0.743V | 0.023V | 0.650V | 0.511V | 0.139V | 26 min |
| Comparative Example 10 | 0.823V | 0.816V | 0.007V | 0.697V | 0.643V | 0.054V | 90 min |
| Remarks: ΔV is negligible in the range of ±0.01. | | | | | | | |

It can be seen from Table 2 that:
(1) Comparative Example 1 and Comparative Example 2 are compared, and Comparative Example 7 and Comparative Example 8 are compared, the cell reversal tolerance times of Comparative Example 1 and Comparative Example 2 are both 40min, the cell reversal tolerance times of Comparative Example 7 and Comparative Example 8 are both 60min, under the condition that the HOR catalyst and the OER catalyst of the anode catalyst of the membrane electrode assembly have higher content of active components and the cell reversal tolerance times are the same, the performance loss after cell reversal is reduced. Under the condition that the HOR catalysts and the OER catalysts of the anode catalyst of the membrane electrode assembly have the same content of active components, the longer the cell reversal tolerance time is, the more performance loss after cell reversal is. Further, it can be seen from FIG. 2 (the effect of Pt (Ir) mass fraction on the performance loss after cell reversal) that the high Pt (Ir) mass fraction reduces the amount of carbon carrier, so that less carbon is corroded, thereby reducing the performance loss after cell reversal.

Further, from the comparison between Example 1 and Example 2, it can be seen that when the HOR catalyst is respectively distributed in the region near the membrane and the region near the anode diffusion layer, the high mass fraction of Pt (Ir) reduces the amount of carbon carrier, so that less carbon is corroded, thereby significantly extending the cell reversal tolerance time.

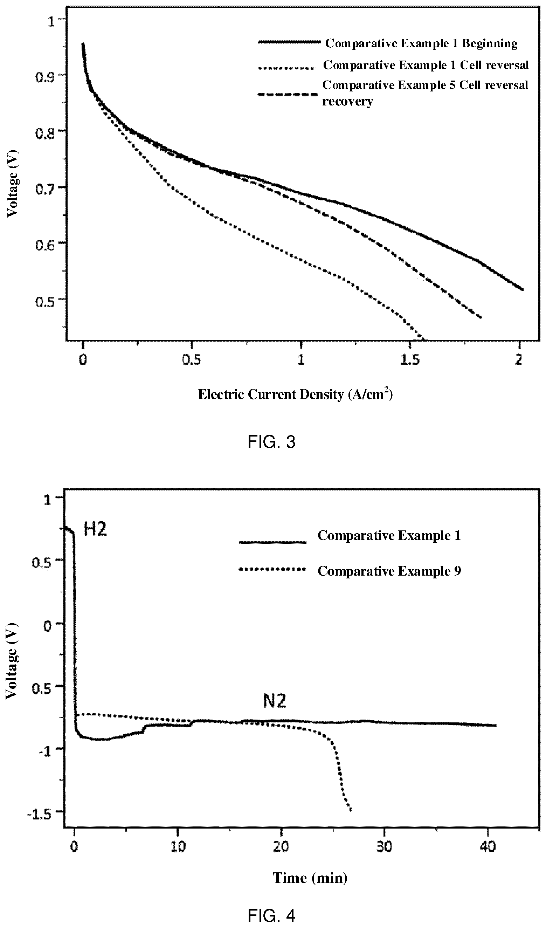

(2) It can be seen from the comparison between Comparative Example 1 and Comparative Example 5, and between Comparative Example 2 and Comparative Example 6 that the value of ΔV decreases after the membrane electrode assembly is placed overnight. Further, it can also be seen from FIG. 3 (the effect of the overnight recovery of the membrane electrode assembly on the performance loss after cell reversal) that after overnight recovery, the performance loss after cell reversal may be reduced, which indicates that after overnight recovery, the reversible loss part of the membrane electrode assembly may be recovered, and the performance loss of the membrane electrode assembly may be reduced. The reason is that overnight recovery reduces the internal temperature of the membrane electrode assembly, increases the humidity, increases the three-phase interface constructed, and thus partially recovers the performance loss. Therefore, the performance loss after cell reversal can be tested after overnight recovery to avoid calculating the reversible loss in the performance loss after cell reversal, so that the study of the performance loss after cell reversal is more accurate.

(3) It can be seen from Comparative Example 1 and Comparative Example 9 that the carriers of the OER catalyst and the HOR catalyst provided by Comparative Example 1 are graphitized Ketjen Black GrC, and the carriers of the OER catalyst and HOR catalyst provided by Comparative Example 9 are Ketjen Black C. The membrane electrode assembly provided by Comparative Example 1 has a longer cell reversal tolerance time and less performance loss after cell reversal, which indicates that the corrosion resistance of graphitized Ketjen Black is better than that of Ketjen Black. Further, as can be seen from FIG. 4 (the effect of carbon carrier graphitization on the cell reversal tolerance time), when the carbon carrier is ordinary Ketjen Black without graphitization treatment, the corrosion rate of the carbon carrier is fast, the Ir component carried by it falls off in a short period of time, and the cell reversal tolerance time is difficult to be maintained; with the shedding of the Ir component, the anode potential inevitably rises, which aggravates the corrosion of the carbon carrier on the anode side and the shedding of the Pt component, and the performance loss after cell reversal is larger. When the carbon carrier is graphitized Ketjen Black, corrosion rate thereof is relatively slow, which inhibits the shedding of the Ir component, thereby avoiding the sharp rise of the anode potential, slowing down the corrosion of the carbon carrier on the anode side and the shedding of Pt, and finally, the performance loss after cell reversal is reduced.

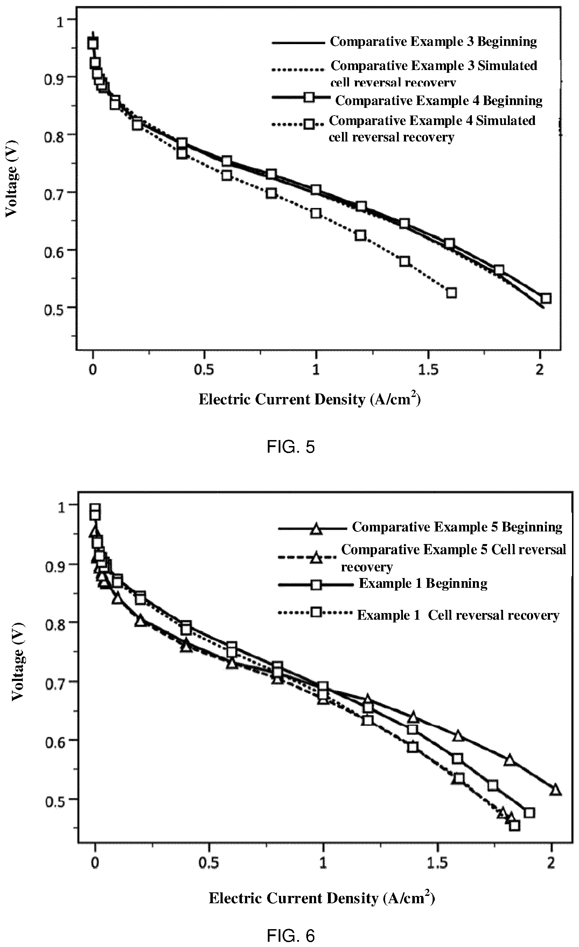

(4) The effect of the double-layer distribution of the HOR catalyst on carbon corrosion is verified by a test procedure of simulated anode aging. As can be seen from FIG. 5 (the effect of the distribution of HOR catalyst on the performance loss caused by simulated cell reversal), when the anode potential is set to 1.6 V and the cell reversal is simulated for 2h, the performance loss when the HOR catalyst is respectively distributed in the region near the membrane and the region near the gas diffusion layer is significantly lower than that when the HOR catalyst is entirely distributed in the region near the membrane, which provides an idea for reducing the performance loss after cell reversal.

Further, Example 1 is compared with Comparative Example 5, under the condition of the same cell reversal tolerance time, the performance loss when the HOR catalyst is respectively distributed in the region near the membrane and the region near the anode diffusion layer is lower than that when the HOR catalyst is entirely distributed in the region near the membrane, which proves that the double-layer design of the HOR catalyst is beneficial to reduce the performance loss after cell reversal. It can be seen from FIG. 6 (the effect of the distribution of HOR catalyst on performance loss after cell reversal) that the performance loss when the HOR catalyst is respectively distributed in the region near the membrane and the region near the anode diffusion layer is lower than that when the HOR catalyst is entirely distributed in the region near the membrane after 40 min of the cell reversal, which proves that the double-layer design of the HOR catalyst is beneficial to reduce the performance loss after cell reversal.

Example 2 is compared with Comparative Example 10, a part of the HOR catalyst in Example 2 is formed on the side of the anode near the membrane layer, and another part is formed on the side of the anode near the anode diffusion layer; and the HOR catalyst provided by Comparative Example 10 is entirely formed on the side of the anode near the membrane layer. It can be seen from the data in the table that under the condition of the same cell reversal time of 90min, the performance loss after cell reversal of the membrane electrode assembly provided by Example 2 is smaller. It shows that the HOR catalyst is respectively distributed in the region near the membrane and the region near the anode diffusion layer, which can significantly reduce carbon corrosion and performance loss after cell reversal while ensuring the initial performance.

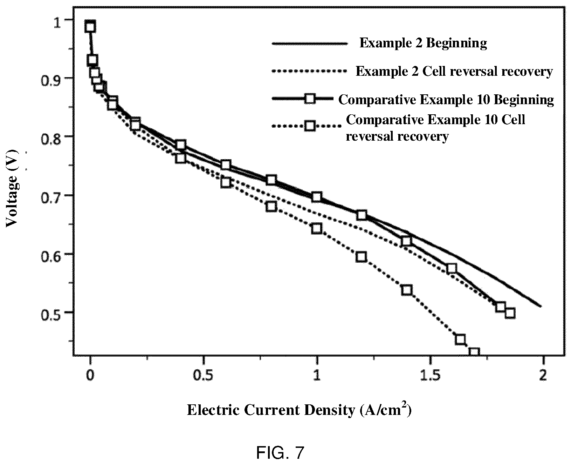

Further, it can be seen from FIG. 7 (the effect of the distribution of HOR catalyst on performance loss after cell reversal) that the performance loss when the HOR catalyst is respectively distributed in the region near the membrane and the region near the anode diffusion layer is significantly lower than that when the HOR catalyst is entirely distributed in the region near the membrane after 90 min of the cell reversal, which proves again that the double-layer design of the HOR catalyst is beneficial to reduce the performance loss after cell reversal.

The reason is that since the water of the cathode is more than that of the anode in the membrane electrode assembly, the water of the cathode may be reversely diffused to the anode, so the water content in the region of the anode near the membrane is higher than that in the region near the gas diffusion layer. The cell reversal mainly occurs on the anode side of the membrane electrode assembly, and the carbon corrosion is jointly determined by the anode potential, the corrosion resistance of the carbon carrier, and the water content near the carbon carrier. The higher the anode potential is, the more severe the carbon corrosion is, the introduction of OER catalyst can reduce the anode potential; the higher the corrosion resistance of the carbon carrier is, the slower the carbon corrosion is. The closer the carbon carrier is to the membrane, the more severe the situation that it is corroded by water is, the shorter the distance that the generated protons are transported to the cathode is, and the more easily the carbon corrodes. Therefore, the closer the carbon carrier is to the membrane, the more severe the corrosion is; if the carbon carrier is entirely distributed in the region near the anode diffusion layer, the initial performance decreases due to the significantly increased proton transport distance of the protons, in order to take into account both the initial performance and the reduction of carbon corrosion, the HOR catalyst is respectively distributed in the region near the membrane and the region near the anode diffusion layer, which can significantly reduce the performance loss after cell reversal and extend the cell reversal tolerance time while ensuring the initial performance.

The above-described embodiments are part of the embodiments of the present disclosure, rather than all embodiments. The detailed description of the embodiments of the present disclosure is not intended to limit the claimed scope of the present disclosure, but merely represents selected embodiments of the present disclosure. Based on the embodiments in the present disclosure, all other embodiments obtained by those ordinarily skilled in the art, without making inventive effort, fall within the protection scope of the present disclosure.

### Industrial Applicability

The membrane electrode assembly and the manufacturing method thereof provided by the embodiments of the present disclosure can not only reduce the performance loss after cell reversal, but also extend the cell reversal tolerance time, so that the performance of the fuel cell is better, which is beneficial to extend the service life of the fuel cell.

## Claims

1. A membrane electrode assembly, comprising:
a proton exchange membrane,
an anode catalyst layer, and
an anode diffusion layer,
wherein the anode catalyst layer comprises a first catalyst layer and a second catalyst layer, and the proton exchange membrane, the first catalyst layer, the second catalyst layer and the anode diffusion layer are arranged in sequence,
wherein the first catalyst layer comprises a hydrogen oxidation catalyst, and the second catalyst layer comprises a mixture of a hydrogen oxidation catalyst and a water electrolysis catalyst.

2. The membrane electrode assembly according to claim 1, wherein a mass ratio of the hydrogen oxidation catalyst in the first catalyst layer and the hydrogen oxidation catalyst in the second catalyst layer is 1:10-1:0.1.

3. The membrane electrode assembly according to claim 2, wherein a mass ratio of the hydrogen oxidation catalyst in the first catalyst layer and the hydrogen oxidation catalyst in the second catalyst layer is 1:5-1:0.5.

4. The membrane electrode assembly according to claim 1, wherein the water electrolysis catalyst comprises a first carrier and an active component of the water electrolysis catalyst loaded on the first carrier.

5. The membrane electrode assembly according to claim 4, wherein the active component of the water electrolysis catalyst comprises one or more of RuO₂, IrO₂ and RuₓIr₁₋ₓO₂.

6. The membrane electrode assembly according to claim 4, wherein the first carrier is one selected from graphitic carbon, Ti₄O₇, Nb-TiO₂, and ITO.

7. The membrane electrode assembly according to claim 4, wherein a mass percentage of the active component of the water electrolysis catalyst in the water electrolysis catalyst is 10%-80%.

8. The membrane electrode assembly according to claim 7, wherein a mass percentage of the active component of the water electrolysis catalyst in the water electrolysis catalyst is 40%-80%.

9. The membrane electrode assembly according to claim 1, wherein the hydrogen oxidation catalyst comprises a second carrier and an active component of the hydrogen oxidation catalyst loaded on the second carrier.

10. The membrane electrode assembly according to claim 9, wherein the active component of the hydrogen oxidation catalyst comprises one or more of Pt, Ir, Ptlr alloy and Pd.

11. The membrane electrode assembly according to claim 9, wherein the second carrier is one selected from graphitic carbon, Ti₄O₇, Nb-TiO₂, and ITO.

12. The membrane electrode assembly according to claim 9, wherein a mass percentage of the active component of the hydrogen oxidation catalyst in the hydrogen oxidation catalyst is 10%-80%.

13. The membrane electrode assembly according to claim 12, wherein a mass percentage of the active component of the hydrogen oxidation catalyst in the hydrogen oxidation catalyst is 40%-80%.

14. A fuel cell, comprising the membrane electrode assembly according to any one of claims 1-13.

15. A manufacturing method of the membrane electrode assembly according to any one of claims 1-13, wherein the hydrogen oxidation catalyst is formed on an anode side of the proton exchange membrane to obtain the first catalyst layer, and the mixture of the hydrogen oxidation catalyst and the water electrolysis catalyst is formed on the anode diffusion layer to obtain the second catalyst layer, and the first catalyst layer and the second catalyst layer are attached to each other; or
the hydrogen oxidation catalyst is formed on the anode side of the proton exchange membrane to obtain the first catalyst layer, and the mixture of the hydrogen oxidation catalyst and the water electrolysis catalyst is formed on one side of the first catalyst layer facing away from the proton exchange membrane to obtain the second catalyst layer, and the anode diffusion layer is formed on one side of the second catalyst layer facing away from the first catalyst layer.

16. The manufacturing method of the membrane electrode assembly according to claim 15, wherein a mass ratio of the hydrogen oxidation catalyst in the first catalyst layer and the hydrogen oxidation catalyst in the second catalyst layer is adjusted to 1:10-1:0.1.

17. The manufacturing method of the membrane electrode assembly according to claim 16, wherein a mass ratio of the hydrogen oxidation catalyst in the first catalyst layer and the hydrogen oxidation catalyst in the second catalyst layer is adjusted to 1:5-1:0.5.
